**Europäisches Patentamt**

(19) **European Patent Office**

**Office européen des brevets**

(11) Veröffentlichungsnummer: **0 088 221**
**B1**

(12) **EUROPÄISCHE PATENTSCHRIFT**

(45) Veröffentlichungstag der Patentschrift:
**11.09.85**

(51) Int. Cl.⁴: **F 22 B 1/18**, F 28 D 7/00,
C 10 J 3/86, C 10 K 1/04

(21) Anmeldenummer: **83100737.2**

(22) Anmeldetag: **27.01.83**

(54) Vorrichtung zum Kühlen eines in einem Vergaser erzeugten Gases.

(30) Priorität: **09.03.82 DE 3208421**

(43) Veröffentlichungstag der Anmeldung:
**14.09.83 Patentblatt 83/37**

(45) Bekanntmachung des Hinweises auf die Patenterteilung:
**11.09.85 Patentblatt 85/37**

(84) Benannte Vertragsstaaten:
**DE FR GB NL**

(56) Entgegenhaltungen:
**FR - A - 1 215 765**
**GB - A - 772 991**
**GB - A - 2 068 095**
**US - A - 3 356 159**

(73) Patentinhaber: **Deutsche Babcock Anlagen Aktiengesellschaft, Duisburger Strasse 375, D-4200 Oberhausen 1 (DE)**

(72) Erfinder: **Maurer, Erich, Lothringer Strasse 208, D-4200 Oberhausen 1 (DE)**
Erfinder: **Rafael, Aruth, Albert-Einstein-Strasse 13, D-4230 Wesel (DE)**
Erfinder: **Wefing, Heinrich, Reichspräsidentenstrasse 21, D-4330 Mülheim (DE)**

(74) Vertreter: **Müller, Jürgen, Dipl.-Ing., Deutsche Babcock AG Lizenz- und Patentabteilung Duisburger Strasse 375, D-4200 Oberhausen 1 (DE)**

## Beschreibung

Die Erfindung betrifft eine Vorrichtung zum Kühlen eines in einem Vergaser erzeugten Produktgases, die aus einem Strahlungsteil und einem sich daran anschließenden Konvektionsteil besteht, die jeweils ein Druckgefäß mit einem Einsatz enthalten, der mit Abstand von der Wand des Druckgefäßes angeordnet und aus gasdicht miteinander verschweißten Rohren gebildet ist, wobei der Strahlungsteil getrennt von dem Vergaser aufgestellt und mit diesem über eine Rohrleitung verbunden ist.

Eine solche Vorrichtung ist aus der GB-A-2 068 095 bekannt. Das von dem Vergasungsreaktor gelieferte und dem Strahlungsteil zugeführte Produktgas enthält aufgrund der Temperaturführung im Vergasungsreaktor noch geschmolzene Aschepartikel. Auf dieses Gas ist der Strahlungsteil der bekannten Vorrichtung in der Weise abgestellt, daß die Strahlungsheizflächen derart bemessen sind, daß die Gastemperatur am Ausgang des Strahlungsteiles unterhalb der Sintertemperatur der Asche der verwendeten Kohle liegt.

Die Erfindung geht von einem Abhitzesystem für einen Vergaser nach der Gattung des Hauptanspruches aus. Ihr liegt die Aufgabe zugrunde, das Abhitzesystem derart abzuwandeln, daß es auf ein in dem Vergaser erzeugtes Produktgas abgestimmt ist, dessen Temperatur im wesentlichen unterhalb der Sintertemperatur der Asche liegt.

Die Aufgabe wird erfindungsgemäß dadurch gelöst, daß die Einsätze in dem Druckgefäß herausnehmbar angeordnet sind und daß innerhalb des Einsatzes des Strahlungsteiles im Bereich des Gaseintrittes ein freier Beruhigungsraum und in Strömungsrichtung des Produktgases hinter dem Beruhigungsraum gekühlte Schottenwände angeordnet sind.

Dieses Abhitzesystem kann an jeden Vergaser angeschlossen werden, da keine konstruktive Einheit zwischen dem Vergaser und dem Strahlungsteil des Abhitzesystemes besteht. Da das Produktgas keine Aschebestandteile in flüssiger Form enthält und somit die Gefahr einer Verschmutzung der Heizflächen herabgesetzt ist, können in den Strahlungsteil Schottenwände eingebaut werden. Aufgrund dieser Schottenwände, die das Produktgas intensiv kühlen, können die insgesamt notwendigen Strahlungsheizflächen auf einen kleinen Raum zusammengedrängt werden. Der Beruhigungsraum oberhalb der Schottenwände sorgt für eine Vergleichsmäßigung der Strömung.

Ein Ausführungsbeispiel der Erfindung ist in der Zeichnung dargestellt und wird im folgenden näher erläutert. Es zeigt

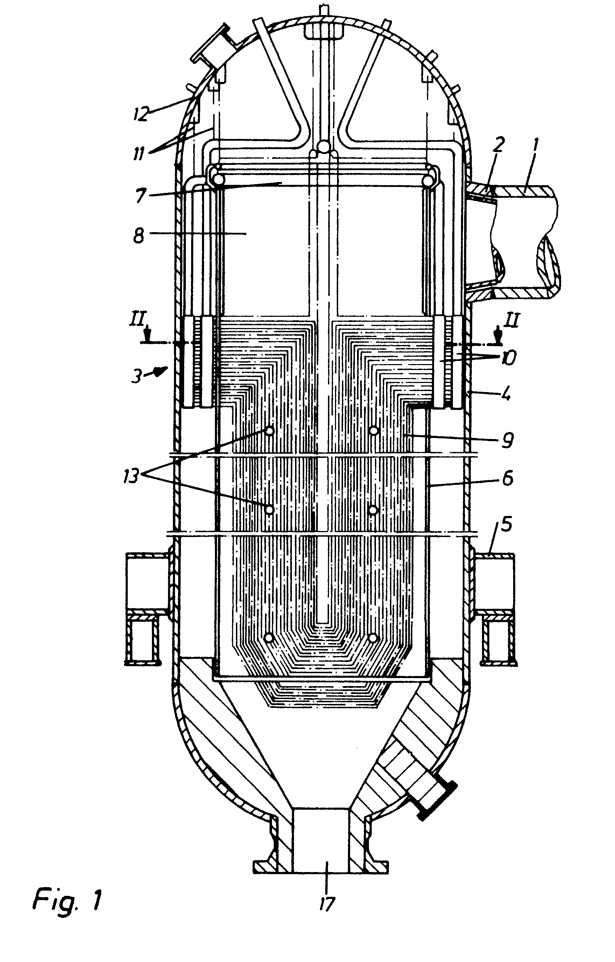

Fig. 1 den Längsschnitt durch den Strahlungsteil einer Vorrichtung gemäß der Erfindung,

Fig. 2 den Schnitt II-II nach Fig. 1,

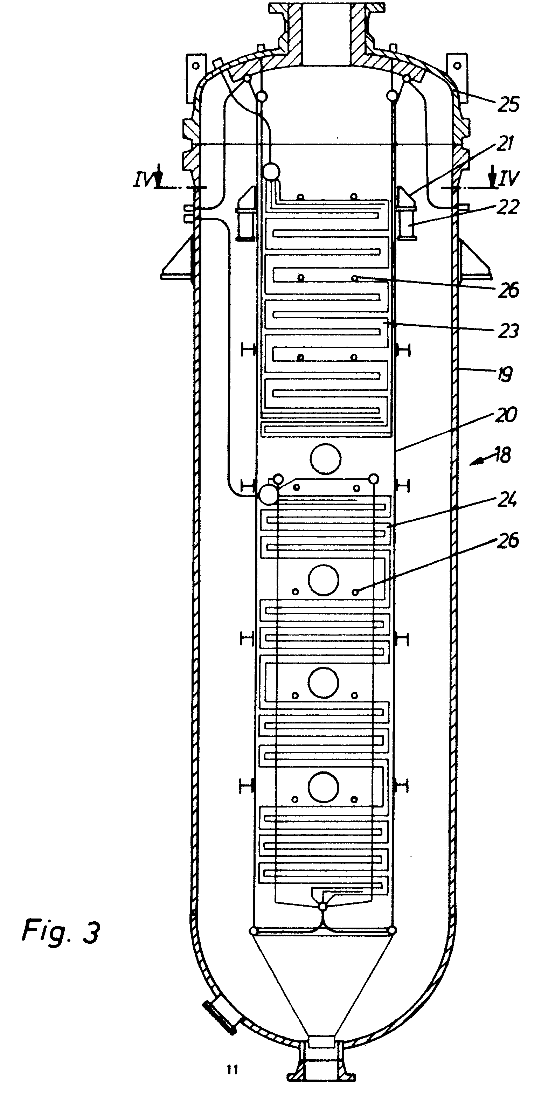

Fig. 3 den Längsschnitt durch den Konvektionsteil einer Vorrichtung gemäß der Erfindung und

Fig. 4 den Schnitt IV-IV nach Fig. 3.

In einem nicht dargestellten Vergaser, der als ein mit Überdruck betriebener Flugstrom- oder Wirbelschichtvergaser ausgebildet sein kann, wird ein Produktgas hergestellt. Die Temperatur des Produktgases ist gerade so hoch, daß in dem von dem Produktgas mitgeführten Flugstaub keine schmelzenden Aschebestandteile enthalten sind. Der Vergaser ist über eine kurze Rohrleitung 1 mit dem Eintrittsstutzen 2 eines zu einem Abhitzesystem gehörenden Strahlungsteiles 3 verbunden.

Der Strahlungsteil 3 besteht aus einem vorzugsweisen zylindrischen Druckgefäß 4, das über Pratzen 5 auf einem äußeren Stützgerüst abgestützt ist. Innerhalb des Druckgefäßes 1 ist unter Einhaltung eines Abstandes von der Gefäßwandung ein Einsatz 6 vorgesehen, der aus senkrecht liegenden Rohren gebildet ist, die über Stege gasdicht miteinander verschweißt sind. Dieser Einsatz stellt einen Strahlungskühler dar, der parallel zu den Rohren von oben nach unten von dem zu kühlenden Produktgas durchströmt ist.

Der Eintrittsstutzen 2 ist in dem oberen Teil der Seitenwand des Druckgefäßes 4 angeordnet. In der Höhe des Eintrittsstutzens 2 sind zur Bildung einer Eintrittsöffnung die Rohre des Einsatzes 6 aufgefächert. Nach oben ist der Einsatz durch eine Decke 7 geschlossen, die ebenso wie der übrige Einsatz aus Rohren besteht, die über Stege gasdicht miteinander verschweißt sind.

In dem oberen Teil des Einsatzes 6 ist ein von Einbauten freigehaltener Beruhigungsraum 8 vorgesehen, durch den die Strömung des seitlich eintretenden Gases gleichgerichtet wird. Die Höhe des Beruhigungsraumes 8 entspricht in etwa der Höhe des Eintrittsquerschnittes des Gases. Unterhalb des Beruhigungsraumes 8 sind in dem Einsatz 6 mehrere aus Rohren gebildete Schottenwände 9 aufgehängt, die parallel zueinander und damit parallel zur Strömungsrichtung des Gases ausgerichtet sind. Die Rohre der Schottenwände 9 sind durch den Einsatz 6 hindurchgeführt und münden in Sammler 10, die zwischen dem Einsatz 6 und der Gefäßwandung vorgesehen sind.

Die Zuführungen zu den Sammlern 10 sind ebenso wie der gesamte Einsatz 6 in dem Druckgefäß 4 aufgehängt. Dabei sind die Aufhängungen 11 in dem Deckel 12 des Druckgefäßes 4 befestigt. Alle Aufhängungen 11 sind in dem durch den Einsatz 6 und die Decke 7 abgetrennten Innenraum des Druckgefäßes 4 vorgesehen. Damit kommen die Aufhängungen 11 nicht mit dem heißen Produktgas in Berührung. Der die Aufhängungen 11 tragende Deckel 12 ist abnehmbar. Bei einem Anheben des Deckels 12 können sämtliche Einbauteile mit angehoben werden und damit aus dem Druckgefäß 4 herausgezogen werden.

Quer zu den Schottenwänden 9 sind in mehreren waagerechten Ebenen übereinander Rußbläser 13 geführt. Jeder Rußbläser 13 besteht aus einem äußeren Mantelrohr 14, in das das eigentliche Blasrohr 15 konzentrisch und mit Abstand eingesetzt ist. Die Blasdüsen für den Austritt des Blasmediums sind durch das Mantelrohr 14 hindurch geführt. Der Zwischenraum zwischen dem Mantelrohr 14 und dem Blasrohr 15 ist von einem Kühlmittel durchströmt, das an den die Rohre des Einsatzes 6 und der Schottenwände 9 kühlenden Kreislauf angeschlossen ist.

Die Schottenwände 9 sind an den Mantelrohren 14 der Rußbläser 13 geführt. Die Rußbläser 13 dienen somit den Schottenwänden 9 als Abstandshalter und geben eine Sicherung gegen Vibrationen.

Weitere in gleicher Weise wie die Rußbläser 13 ausgebildete gekühlte und feststehende Rußbläser sind als Wandrußbläser 16 parallel zu den Rohren des Einsatzes 6 angeordnet. Diese Wandrußbläser 16 sind in die Wand des Einsatzes 6 eingebunden.

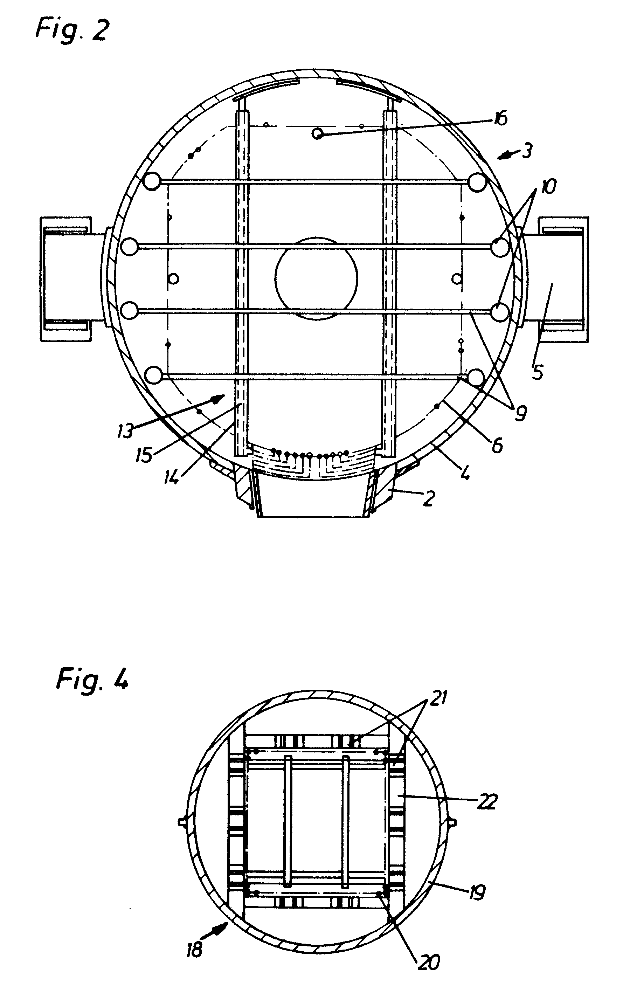

Nach Fig. 2 ist der im übrigen zylindrische Einsatz 6 an drei Seiten abgeflacht. Auf diese Weise wird der freie Querschnitt zwischen dem Einsatz 6 und der Wandung des Druckgefäßes 4 vergrößert. Hierdurch ist Raum geschaffen, durch den das Druckgefäß 4 begehbar gemacht ist und in welchem die Sammler 10 und die Zuführungsleitungen zu den Sammlern und den Rußbläsern untergebracht werden können. Das teilweise abgekühlte Produktgas wird durch einen im unteren Teil des Druckgefäßes 4 des Strahlungsteiles 3 angeordneten Austrittsstutzen 17 abgezogen und über eine Rohrleitung einem Konvektionsteil 18 des Abhitzesystemes zugeführt. Zwischen dem Strahlungsteil 3 und dem Konvektionsteil 18 kann ein Staubabscheider vorgesehen sein.

Der Konvektionsteil 18 ist ebenso wie der Strahlungsteil 3 durch ein Druckgefäß 19 gebildet, in welchem mit Abstand von der Wandung des Druckgefäßes 19 ein Einsatz 20 angeordnet ist. Der Einsatz 20 ist aus senkrecht angeordneten Rohren gebildet, die über Stege zu einer gasdichten Wand miteinander verschweißt sind. Dieser Einsatz 20 wird von oben nach unten von dem zu kühlenden Produktgas durchströmt.

An die Außenseite des Einsatzes 20 sind Pratzen 21 angesetzt. Diese Pratzen 21 ruhen auf Trägern 22 auf, die an der Wandung des Druckgefäßes abgestützt sind.

Innerhalb des Einsatzes 20 des Konvektionsteiles 18 sind in zwei Abschnitten Konvektionsheizflächen in Form von schlangenförmig angeordneten Rohrbündeln untergebracht. Die in dem oberen Teil des Einsatzes 20 angeordneten Bündelheizflächen 23 sind als Überhitzer geschaltet. Diese Bündelheizflächen 23 sind in dem abnehmbaren Deckel 25 des Druckgefäßes 19 aufgehängt. Auf diese Weise können die oberen Bündelheizflächen 23 nach einem Abflanschen des Deckels 25 an diesem hängend aus dem Einsatz 20 des Konvektionsteiles 18 herausgezogen werden.

Die unteren Bündelheizflächen 24 sind mit dem Einsatz 20 verbunden. Sie können, wenn die Rohrverbindungen zu dem Einsatz 20 gelöst sind, mit diesem aus dem Druckgefäß 19 herausgezogen werden.

Durch die Bündelheizflächen 23, 24 sind gekühlte, feststehende Rußbläser 26 geführt, die in der gleichen Weise aufgebaut sind, wie die bereits erwähnten Rußbläser 13 des Strahlungsteiles 3. Die Rußbläser 26 sind mit den Bündelheizflächen 23, 24 verbunden. Dabei sind die Rußbläser 26 der oberen Bündelheizflächen 23 innerhalb des Einsatzes 20 vorgesehen, während die Rußbläser 26 der unteren Bündelheizflächen 24 durch den Einsatz 20 hindurchgeführt sind. Die Bündelheizflächen 23, 24 können daher zusammen mit den ihnen zugeordneten Rußbläsern 26 herausgenommen werden.

**Patentansprüche**

1. Vorrichtung zum Kühlen eines in einem Vergaser erzeugten Produktgases, die aus einem Strahlungsteil (3) und einem sich daran anschließenden Konvektionsteil (18) besteht, die jeweils ein Druckgefäß (4, 19) mit einem Einsatz (6, 20) enthalten, der mit Abstand von der Wand des Druckgefäßes (4, 19) angeordnet und aus gasdicht miteinander verschweißten Rohren gebildet ist, wobei der Strahlungsteil (3) getrennt von dem Vergaser aufgestellt und mit diesem über eine Rohrleitung (1) verbunden ist, dadurch gekennzeichnet, daß die Einsätze (6, 20) in dem Druckgefäß (4, 19) herausnehmbar angeordnet sind und daß innerhalb des Einsatzes (6) des Strahlungsteiles (3) im Bereich des Gaseintrittes ein freier Beruhigungsraum (8) und in Strömungsrichtung des Produktgases hinter dem Beruhigungsraum (8) gekühlte Schottenwände (9) angeordnet sind.

2. Vorrichtung nach Anspruch 1, dadurch gekennzeichnet, daß der Strahlungsteil (3) in seinem oberen Teil mit einem seitlichen Eintrittsstutzen (2) zur Verbindung mit der Rohrleitung (1) versehen ist und daß der Einsatz (6) oberhalb des Beruhigungsraumes (8) durch eine Decke (7) geschlossen ist, die durch gasdicht miteinander verschweißte, gekühlte Rohre gebildet ist.

3. Vorrichtung nach Anspruch 1, dadurch gekennzeichnet, daß der Einsatz (6) des Strahlungsteiles (3) in dem Druckgefäß (4) über Aufhängungen (11) aufgehängt ist.

4. Vorrichtung nach Anspruch 3, dadurch gekennzeichnet, daß das Druckgefäß (4) mit einem abnehmbaren Deckel (12) versehen ist und daß die Aufhängungen (11) mit dem Deckel (12) verbunden sind.

5. Vorrichtung nach Anspruch 4, dadurch gekennzeichnet, daß die Zuführungen zu den Rohren des Strahlungsteiles (3) und die Aufhängungen (11) zwischen der Decke (7) des Einsatzes (6) und dem Deckel (12) des Druckgefäßes (4) angeordnet sind.

6. Vorrichtung nach einem der Ansprüche 1 bis 5, dadurch gekennzeichnet, daß der Einsatz (6) des Strahlungsteils (3) an mindestens einer Seite unter Vergrößerung des Abstandes zu der Wand des Druckgefäßes (4) abgeflacht ist.

7. Vorrichtung nach Anspruch 1, dadurch gekennzeichnet, daß die Schottenwände (9) parallel zueinander und zur Längsachse des Einsatzes (6) angeordnet sind.

8. Vorrichtung nach Anspruch 1 oder 7, dadurch gekennzeichnet, daß die Rohre der Schottenwände (9) durch den Einsatz (6) hindurchgeführt und mit Sammlern (10) verbunden sind.

9. Vorrichtung nach einem der Ansprüche 1 bis 8, dadurch gekennzeichnet, daß senkrecht zu den Schottenwänden (9) waagerecht liegende Rußbläser (13) durch die Wand und den Innenraum des Einsatzes (6) geführt sind, daß die Rußbläser (13) aus einem Blasrohr (15) bestehen, das in einem Abstand von einem Mantelrohr (14) umgeben ist, wobei durch den Zwischenraum zwischen dem Mantelrohr (14) und dem Blasrohr (15) ein Kühlmittel geführt ist und daß die Schottenwände (9) auf dem Mantelrohr (14) gehalten sind.

10. Vorrichtung nach Anspruch 9, dadurch gekennzeichnet, daß in Längsrichtung des Einsatzes (6) weitere gekühlte Wandrußbläser (16) angeordnet sind.

11. Vorrichtung nach Anspruch 1, dadurch gekennzeichnet, daß der Einsatz (20) des Konvektionsteiles (18) auf dem Druckgefäß (19) abgestützt ist.

12. Vorrichtung nach Anspruch 11, dadurch gekennzeichnet, daß in dem oberen Teil des Konvektionsteiles (18) Bündelheizflächen (23) innerhalb des Einsatzes (20) angeordnet und an einem abnehmbaren Deckel (25) des Druckgefäßes (19) aufgehängt sind.

13. Vorrichtung nach Anspruch 11 oder 12, dadurch gekennzeichnet, daß in dem Einsatz (20) weitere Bündelheizflächen (24) angeordnet sind, die zusammen mit dem Einsatz (20) aus dem Druckgefäß (19) herausnehmbar sind.

14. Vorrichtung nach Anspruch 13, dadurch gekennzeichnet, daß mit den Bündelheizflächen (23, 24) gekühlte Rußbläser (26) fest verbunden sind.

## Claims

1. Device for cooling a product gas produced in a gasifier which consists of a radiant section (3) and the downstream convection part (18) each of which includes a pressure vessel (4, 19) with an insert (6, 20) which is arranged at a certain distance from the wall of the pressure vessel (4, 19) and is formed by gastight welded tubes where the radiant section (3) is separated from the gasifier and is connected with the same through a pipe (1), characterized by the inserts (6, 20) which can be removed from the pressure vessel (4, 19), and by the insert (6) of the radiant section (3) with a free surge chamber (8) arranged in the area of the gas inlet and with cooled platen elements (9) in the flow sense of the product gas downstream of the surge chamber (8).

2. Device according to claim 1, characterized by the the radiant section (3) which in its upper part is equipped with a lateral inlet nozzle (2) for the connection to the pipe (1), and by the insert (6) which above the surge chamber (8) is closed by a cover (7) which is formed by gastight welded, cooled tubes.

3. Device according to claim 1, characterized by the insert (8) of the radiant section (3) which is suspended in the pressure vessel (4) by means of hangers (11).

4. Device according to claim 3, characterized by the pressure vessel (4) which is provided with a removable cover (12) and by the hangers (11) which are connected with the cover (12).

5. Device according to claim 4, characterized by the feeders to the tubes of the radiant section (3) and the hangers (11) which are arranged between the cover (7) of the insert (6) and the cover (12) of the pressure vessel (4).

6. Device according to claims 1 to 5, characterized by the insert (6) of the radiant section (3) which is flattened at least at one side while the distance to the wall of the pressure vessel (4) is increased.

7. Device according to claim 1, characterized by the platen elements (9) which are arranged in parallel with regard to each other and to the longitudinal axis of the insert (6).

8. Device according to claim 1 or 7, characterized by the tubes of the platen elements (9) which are passed through the insert (6) and connected with headers (10).

9. Device according to claims 1 to 8, characterized by horizontal sootblowers (13) arranged in vertical sense to the platen elements (9) which are passed through the wall and introduced into the inside of the insert (6), by the sootblowers (13) which consist of a blowing tube (15) which at a certain distance is surrounded by a jacket tube (14) where a coolant is fed through the space between the jacket tube (14) and the blowing tube (15), and by the platen elements (9) which are held on the jacket tube (14).

10. Device according to claim 9, characterized by other cooled wall-mounted sootblowers (16) which are arranged in longitudinal sense of the insert (6).

11. Device according to claim 1, characterized by the insert (20) of the convection part (18) which is supported by the pressure vessel (19).

12. Device according to claim 11, characterized by banks (23) which in the upper section of the convection part (18) are arranged inside the insert (20) and are suspended from a removable cover (25) of the pressure vessel (19).

13. Device according to claim 11 or 12, characterized by other banks (24) which are arranged in the insert (20) and can be removed from the pressure vessel (19) together with the insert (20).

14. Device according to claim 13, characterized by cooled sootblowers (26) which are fixed at the banks (23, 24).

## Revendications

1. Dispositif pour le refroidissement d'un gaz de gazogène produit dans un générateur de gaz, constitué d'un échangeur thermique à rayonnement (3) et d'un échangeur thermique à convection (18) raccordé à celui-ci, chacun de ces échangeurs thermiques comportant une cuve à pression (4, 19) équipée d'un compartiment (6, 20) disposé à une certaine distance de la paroi de la cuve à pression (4, 19) et constitué de tubes soudés les uns aux autres de façon étanche aux gaz, l'échangeur thermique à rayonnement (3) étant installé hors du générateur de gaz et raccordé à celui-ci par une tuyauterie (1), caractérisé par le fait que les compartiments (6, 20) sont montés de façon à pouvoir être extraits de la cuve à pression (4, 19) et qu'à l'intérieur du compartiment (6) de l'échangeur thermique à rayonnement (3), sont respectivement disposées, au voisinage de l'entrée du gaz, une chambre de stabilisation (8) séparée du reste de la cuve et, en aval de celle-ci dans le sens d'écoulement du gaz de gazogène, des cloisons-écrans refroidies (9).

2. Dispositif selon la revendication 1, caractérisé par le fait que l'échangeur thermique à rayonnement (3) est doté à sa partie supérieure d'une tubulure d'entrée latérale (2) permettant son raccordement à la tuyauterie (1) et que le compartiment (6) est fermé, au-dessus de la chambre de stabilisation (8), par un couvercle (7) constitué de tubes refroidis soudés les uns aux autres de façon étanche.

3. Dispositif selon la revendication 1, caractérisé par le fait que le compartiment (6) de l'échangeur thermique à rayonnement (3) est suspendu dans la cuve de pression (4) à l'aide d'éléments de suspension (11).

4. Dispositif selon la revendication 3, caractérisé par le fait que la cuve à pression (4) est pourvue d'un couvercle amovible (12) et que les éléments de suspension (11) sont raccordés à ce couvercle (12).

5. Dispositif selon la revendication 4, caractérisé par le fait que les tuyauteries d'alimentation des tubes de l'échangeur thermique à rayonnement (3) et les éléments de suspension (11) sont disposés entre le couvercle (7) du compartiment (6) et le couvercle (12) de la cuve à pression (4).

6. Dispositif selon l'une des revendications 1 à 5, caractérisé par le fait que le compartiment (6) de l'échangeur thermique à rayonnement (3) présente au moins sur un côté un méplat augmentant la distance qui sépare ce compartiment de la paroi de la cuve de pression (4).

7. Dispositif selon la revendication 1, caractérisé par le fait que les cloisons (9) sont disposées parallèlement les unes aux autres et parallèlement à l'axe longitudinal du compartiment (6).

8. Dispositif selon la revendication 7, caractérisé par le fait que les tubes des cloisons (9) traversent le compartiment (6) et sont raccordés à des collecteurs (10).

9. Dispositif selon l'une des revendications 1 à 8, caractérisé par le fait que des tuyères de soufflage des suies (13) disposées perpendiculairement aux cloisons (9) traversent la paroi et l'espace intérieur du compartiment (6), que les tuyères de soufflage des suies (13) sont constituées d'un tube de soufflage (15) monté à une certaine distance d'une enveloppe tubulaire qui l'entoure, un réfrigérant étant amené dans l'espace séparant l'enveloppe tubulaire (14) du tube de soufflage (15), et par le fait que les cloisons (9) sont solidaires de l'enveloppe tubulaire (14).

10. Dispositif selon la revendication 9, caractérisé par le fait que dans la direction longitudinale du compartiment (6), sont disposées d'autres tuyères refroidies de soufflage des suies (16).

11. Dispositif selon la revendication 1, caractérisé par le fait que le compartiment (20) de l'échangeur de chaleur par convection (18) prend appui sur la cuve à pression (19).

12. Dispositif selon la revendication 11, caractérisé par le fait que dans la partie supérieure de l'échangeur de chaleur par convection (18), est disposé un faisceau tubulaire d'échange de chaleur (23) à l'intérieur du compartiment (20), faisceau suspendu à un couvercle amovible (25) de la cuve à pression (19).

13. Dispositif selon la revendication 11 ou 12, caractérisé par le fait que dans le compartiment (20), est disposé un autre faisceau tubulaire d'échange thermique (24) pouvant être extrait de la cuve à pression (19) en même temps que le compartiment (20).

14. Dispositif selon la revendication 13, caractérisé par le fait qu'aux faisceaux tubulaires d'échange de chaleur (23, 24), sont raccordées des tuyères refroidies de soufflage des suies (26).

Fig. 1

## Fig. 2

## Fig. 4

0 088 221

Fig. 3